# FASCICULE DE BREVET EUROPEEN

(11) **EP 1 619 741 B1**
(45) Date de publication et mention de la délivrance du brevet: **07.09.2016**
(21) Numéro de dépôt: 05291500.6
(22) Date de dépôt: 12.07.2005
(51) Int. Cl.: H01M 10/39

(54) **Accumulateur électrochimique au lithium fonctionnant à haute température**
Lithiumbatterie für Anwendung bei hohen Temperaturen
Lithium secondary battery for use at high temperature

(30) Priorité: 23.07.2004 FR 0408183
(43) Date de publication de la demande: 25.01.2006
(73) Titulaire: SAFT, 93170 Bagnolet (FR)
(72) Inventeur: Bonhomme, Frédéric, 33110 Le Bouscat (FR); Biensan, Philippe, 33360 Carignan de Bordeaux (FR); Germond, David, 33110 Le Bouscat (FR); Laluque, Jean-Marc, 33480 Castelnau de Médoc (FR)
(74) Mandataire: Hirsch & Associés

(56) Documents cités:
- EP-A- 0 872 450
- WO-A-02/09215
- ZAGHIB AND AL K: "Solid state lithium ion batteries using carbon or an oxide as negative electrodes" PROCEEDINGS OF THE SYMPOSIUM ON LITHIUM POLYMER BATTERIES, vol. 96, no. 17, 1997, pages 250-264, XP008006382

## Description

### DOMAINE TECHNIQUE

L'invention a pour objet un accumulateur électrochimique rechargeable au lithium apte à fonctionner en stockage ou en cyclage à très haute température (entre 60°C et 180°C).

### ETAT DE LA TECHNIQUE

Les accumulateurs au lithium actuels possèdent de façon classique une anode de carbone capable d'insérer réversiblement du lithium, une cathode comprenant un oxyde lithié de métaux de transitions (LiNiO₂, LiCoO₂, LiMnO₂ , LiMn₂O₄, etc.), un électrolyte constitué d'un sel de lithium dissous dans un solvant organique et un séparateur (en général polymère).

Ces accumulateurs ne sont pas adaptés à fonctionner à des températures supérieures à 60°C. En effet, à de telles températures, la dégradation rapide des composants actifs entraîne des pertes de capacités ainsi qu'une augmentation de la résistance interne de l'accumulateur, ce qui a pour effet de réduire considérablement sa durée de vie.

On recherche donc des accumulateurs électrochimiques au lithium ayant une durée de vie améliorée.

Le document EP-A-0548449 décrit un accumulateur à électrolyte non aqueux présentant une durée de vie améliorée en stockage à haute température (60°C) par l'utilisation d'un solvant composé du mélange de trois constituants: un carboxylate aliphatique, un carbonate cyclique et un carbonate linéaire.

Le document EP-A-0766332 décrit un accumulateur à électrolyte non aqueux présentant une durée de vie améliorée en stockage à 80°C et en cyclage à 45°C par l'utilisation d'un solvant constitué d'un mélange de carbonate cyclique et d'ester cyclique, d'un carbonate linéaire et d'un ester linéaire.

Le document US-A-5284722 décrit un accumulateur à électrolyte non aqueux présentant une durée de vie améliorée en stockage en charge à 60°C et en cyclage à 45°C par l'utilisation d'un solvant constitué d'un mélange de carbonate de propylène avec un ester.

Ces trois documents portent essentiellement sur des modifications de la formulation de l'électrolyte.

Le document WO-A-0209215 décrit un accumulateur lithium-ion capable de fonctionner à une température comprise entre 60°C et 250°C. Le matériau actif d'anode est constitué de Li₄Ti₅O₁₂. Le matériau actif de cathode est du lithium métallique. L'inconvénient d'un tel accumulateur est de délivrer une tension de fonctionnement de 1,4 V, plus faible que celle de 3,7 V, délivrée par un accumulateur à anode constituée de carbone. Ce document n'enseigne en outre dans les exemples que le cas du couple Li₄Ti₅O₁₂/Li.

La communication de l'Université de Delft intitulée "Development for a high-temperature Li-ion battery" (HITEN 2001, Oslo, 5-8 juin 2001) décrit un matériau actif d'anode constitué de Li₄Ti₅O₁₂ et un matériau actif de cathode constitué de LiMn₂O₄. Ce matériau actif de cathode se décompose à une température en fait relativement faible. La tension délivrée est de 2,7 V.

Aucun des documents cités n'enseigne ni ne décrit l' accumulateur selon l'invention.

### RESUME DE L'INVENTION

L'invention fournit donc un accumulateur électrochimique rechargeable au lithium comprenant une cathode, une anode comprenant soit Li₄Ti₅O₁₂ soit un matériau carboné capable d'insérer du lithium, un séparateur en polyéthylène téréphtalate revêtu de céramique, un solvant non-aqueux et un sel de lithium, caractérisé en ce que le matériau actif de ladite cathode est un oxyde de métal lithié de formule

LiNi_{1-x-y}CoₓAl/Mn_{y}O₂ dans laquelle :
Al/Mn signifie Al et/ou Mn
0,15 < x < 0,33 ;
0,05 < y < 0,33;
la somme x+y étant inférieure à 0,66;
et en ce que le sel de lithium est choisi dans le groupe consistant en LiPF₆, LiBF₄, LiBOB, LiBETI et un mélange de ceux-ci.

L'accumulateur selon l'invention est adapté pour fonctionner jusqu'à une température de 180°C.

### BREVE DESCRIPTION DES FIGURES

- La Figure 1 représente la variation de la capacité déchargée des accumulateurs des séries A, B et C hors de l'invention, en fonction du nombre de cycles effectués, au cours du test de cyclage constitué de 5 cycles à 100°C, 10 cycles à 120°C et 5 cycles à 150°C.
- La Figure 2 représente la variation de l'impédance interne des accumulateurs des séries A, B et C hors de l'invention, en fonction du nombre de cycles effectués, au cours du test de cyclage constitué de 5 cycles à 100°C, 10 cycles à 120°C et 5 cycles à 150°C.
- La Figure 3 représente la variation de la capacité déchargée des accumulateurs des séries B (hors invention), D et E de l'invention en fonction du nombre de cycles effectués, au cours d'un test de cyclage à 120°C

### EXPOSE DETAILLE DE MODES DE REALISATION DE L'INVENTION

L'accumulateur comprend de façon générale une électrode positive (cathode) et une électrode négative (anode), un séparateur entre celles-ci et un électrolyte.

La cathode est une des parties qui caractérise l'accumulateur selon l'invention. Il est connu que LiNiO₂ en tant que tel ne présente pas une bonne stabilité à haute température. A haute température, LiNiO₂ est moins stable que les autres matériaux de cathode tels que LiCoO₂. De façon surprenante, ce matériau dans l'accumulateur selon l'invention a un comportement différent. L'invention propose un matériau de cathode à base de LiNiO₂ et de préférence obtenu par substitution dans LiNiO₂ d'une partie du nickel par du cobalt et/ou par de l'aluminium ou du manganèse. La matière active ainsi produite présente une bonne stabilité à haute température ainsi qu'une bonne capacité une fois dans l'accumulateur.

L'électrode positive comprend une matière électrochimiquement active qui est principalement un oxyde de métal lithié de formule LiNi_{1-x-y}CoₓAl/Mn_{y}O₂

dans laquelle:
Al/Mn signifie Al et/ou Mn,
0,15 < x < 0,33 et
0,05 < y < 0,33 ;
la somme x+y étant inférieure à 0,66 (1-x-y > 0,33).

Le matériau actif de ladite cathode est de façon générale un oxyde de métal lithié de structure lamellaire type R-3m.

Selon un mode de réalisation, la somme x+y est inférieure à 0,5.

Selon un mode de réalisation, la matière active de la cathode comprend du cobalt et de l'aluminium ou du manganèse.

On préfèrera les composés suivants:
LiNi_{0,8}Co₀,₁₅Al_{0,05}O₂ et LiNi_{0,55}Co_{0,15}Mn₀,₃₀O₂.

L'électrode positive comprend également un liant tel que le fluorure de polyvinylidène (PVDF) ou un mélange de carboxyméthylcellulose (CMC) et de polymère Styrène-Butadiène (SBR) destiné à augmenter la tenue mécanique et la flexibilité de l'électrode. Elle comprend également en général des particules de carbone afin d'améliorer la conductivité électrique de l'électrode.

L'électrode négative est constituée principalement soit de Li₄Ti₅O₁₂, soit d'un matériau carboné capable d'insérer réversiblement du lithium tel que le graphite, le coke, le noir de carbone, le carbone vitreux ou un mélange de ceux-ci. Elle comprend également un liant tel que le fluorure de polyvinylidène (PVDF) ou un mélange de carboxylméthylcellulose (CMC) et de polymère de Styrène/Butadiène (SBR).

Le séparateur est un polymère possédant une température de fusion élevée, typiquement supérieure à 150°C qui est le polyéthylène-téréphtalate (PET) dont la surface est revêtue de céramique. L'électrolyte est un solvant organique choisi dans le groupe des carbonates cycliques, tels que le carbonate de propylène (PC) et le carbonate d'éthylène (EC) ou des lactones (telle que gamma-butyrolactone) stables thermiquement ou est un mélange de ceux-ci. On préfèrera un mélange équimolaire PC/EC additionné de 2% de carbonate de vinylène (VC), tel que décrit dans la demande de brevet EP-A-0683537. Le carbonate de vinylène a notamment comme effet de stabiliser la couche de passivation formée sur l'électrode de carbone. En général, le solvant est tel qu'il a un point d'ébullition d'au moins 150°C, de préférence d'au moins 200°C.

Le sel utilisé est un sel de lithium choisi parmi les sels suivants: LiPF₆, LiBF₄, LiBOB (lithium Bis oxalatoborate), LiBETI (lithium bisperfluoroethylsulfonylimide) ou un mélange de ceux-ci. On préfèrera LiPF₆. A nouveau, ces sels ne sont pas très stables thermiquement, notamment LiPF₆ qui se décompose dès 80°C selon la réaction suivante:

LiPF₆ → LiF + PF₅

De façon surprenante, ce sel dans l'accumulateur selon l'invention est particulièrement stable. La concentration du sel dans le solvant est variable, par exemple entre 0,5 et 1,5 molaire dans le solvant.

Les accumulateurs sont préparés de façon classique. Les électrodes sont préparées par enduction sur un feuillard métallique d'une encre constituée d'un mélange de matière active, de percolant (ex: carbone) et de liant dispersé dans un solvant. Une fois enduites, les électrodes sont séchées afin d'évaporer le solvant. Les feuillards sont en carbone ou en métal tel que par exemple le cuivre, le nickel, l'acier inox ou l'aluminium. On superpose l'électrode positive, le séparateur, l'électrode négative. On enroule l'ensemble pour former le faisceau électrochimique. Sur la tranche de l'électrode positive, on soude une pièce de connexion raccordée à la borne de sortie de courant. L'électrode négative est reliée électriquement au godet de l'accumulateur. Selon le format de l'accumulateur, la positive peut être au godet et la négative à une borne de sortie. Après insertion dans le godet, on imprègne le faisceau électrochimique avec l'électrolyte. On ferme ensuite l'accumulateur de façon étanche. Le godet est aussi classiquement équipé d'une soupape de sécurité (opercule), qui provoque l'ouverture de l'accumulateur lorsque la pression interne des gaz est supérieure à une valeur prédéterminée.

L'invention présente d'autres avantages que celui de prolonger la durée de vie de l'accumulateur et de permettre un fonctionnement à haute température. En effet, la baisse de la quantité de gaz généré à haute température limite les risques d'ouverture brutale du godet et d'inflammation de ces gaz, ce qui offre une sécurité accrue pour l'utilisateur.

La température à laquelle on peut utiliser l'accumulateur selon l'invention peut aller de -40°C à +180°C en particulier de 20°C à 150°C. L'accumulateur selon l'invention trouve à s'appliquer dans tous les domaines classiques, tels que appareils nomades ou fixes.

La présente invention concerne les accumulateurs au lithium de forme prismatique (électrodes planes) ou de forme cylindrique (électrodes spiralées) ou concentrique.

### EXEMPLES

Les exemples suivants illustrent l'invention sans la limiter.

Cinq séries de deux accumulateurs lithium-ion de format 4/5A ont été fabriquées.

La première série d'accumulateurs, notée A (hors invention), est constituée ainsi:
L'électrode positive est constituée en % en poids de:

| | |
|---|---|
| - LiCoO₂ | 93 % |
| - Carbone divisé | 2 % |
| - Liant PVDF | 5 % |

L'électrode négative est constituée en % en poids de:

| | |
|---|---|
| - Graphite | 96 % |
| - Cellulose (CMC) | 2 % |
| - SBR | 2 % |

L'électrolyte est constitué de 98 % en poids d'un mélange 50/50 de carbonate de propylène/carbonate d'éthylène (PC/EC) et de 2 % en poids de carbonate de vinylène (VC).

Le sel dissous dans cet électrolyte est l'hexafluorophosphate de lithium LiPF₆ une fois molaire.

Le séparateur est une membrane microporeuse en polypropylène.

La seconde série d'accumulateurs, notée B (hors invention), diffère de la première série A uniquement par le fait que la matière active positive a été remplacée par une phase LiNiO₂ substituée, en particulier

LiNi_{0.8}Co_{0.15}Al_{0.05}O₂.

La troisième série d'accumulateurs, notée C (hors invention), diffère de la deuxième série B uniquement par le fait que le séparateur en polypropylène est remplacé par un séparateur en PTFE.

La quatrième série d'accumulateurs, notée D selon l'invention, diffère de la série A par une cathode constituée de LiNi_{0.55}Co_{0.15}Mn_{0.30}O₂ et par un séparateur en polyéthylène téréphtalate (PET) revêtu de céramique.

La cinquième série d'accumulateurs, notée E (selon l'invention), diffère de la série B par un séparateur en polyéthylène téréphtalate (PET) revêtu de céramique.

Le Tableau 1 récapitule les caractéristiques des accumulateurs assemblés:

**Tableau 1**

| **Série** | **Matériau actif de cathode** | **Séparateur** |
|---|---|---|
| A | LiCoO₂ | PP |
| B | LiNi_{0.8}Co_{0.15}Al_{0.05}O₂ | PP |
| C | LiNi_{0.8}Co_{0.15}Al_{0.05}O₂ | PTFE |
| D | LiNi_{0.55}Co_{0.15}Mn_{0.30}O₂ | PET+céramique |
| E | LiNi_{0.8}Co_{0.15}Al_{0.05}O₂ | PET+céramique |

Chaque type d'accumulateur est doublé pour les tests.

Les six accumulateurs des séries A, B et C sont soumis au test de cyclage thermique suivant:
- 5 cycles constitués d'une charge à température ambiante suivie d'une décharge sous un courant de 10mA à 100°C.
- 10 cycles constitués d'une charge à température ambiante suivie d'une décharge sous un courant de 10mA à 120°C.
- 5 cycles constitués d'une charge à température ambiante suivie d'une décharge sous un courant de 10mA à 150°C.

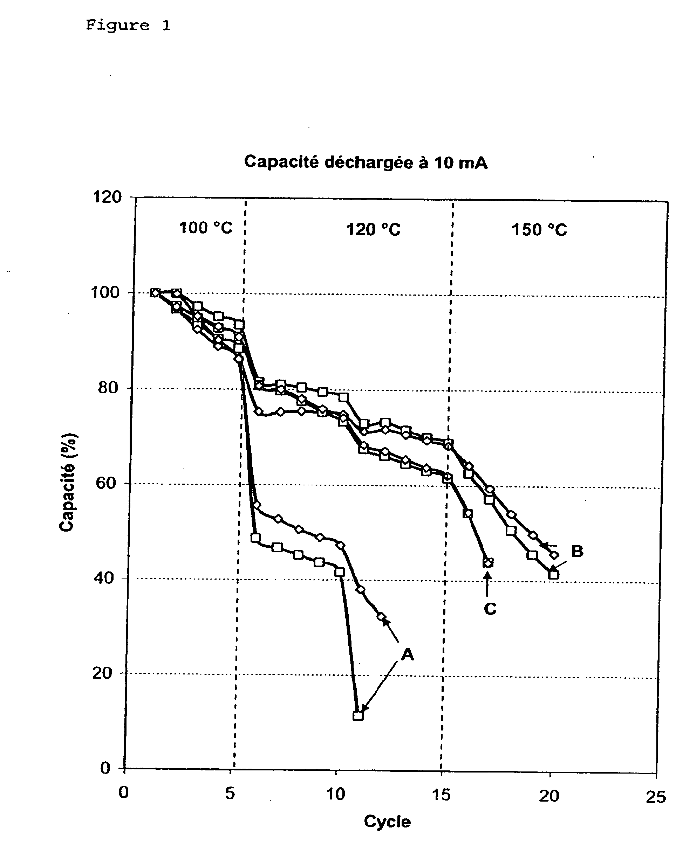

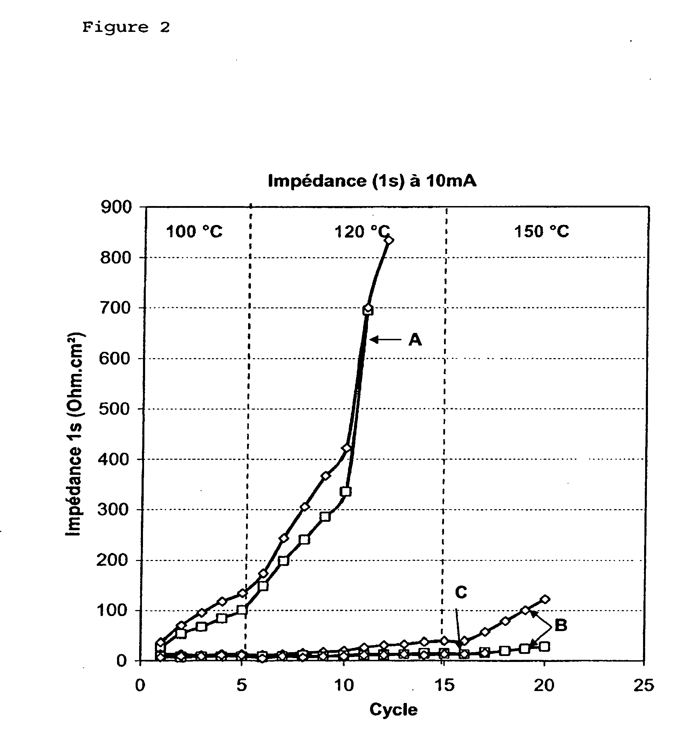

Les résultats de ce test sont reportés dans les Figures 1 et 2 et le Tableau 2.

Les six accumulateurs des séries B, D et E sont soumis au test de cyclage thermique suivant:
- 13 cycles constitués d'une charge à température ambiante suivie d'une décharge sous un courant de C/120 à 120°C.

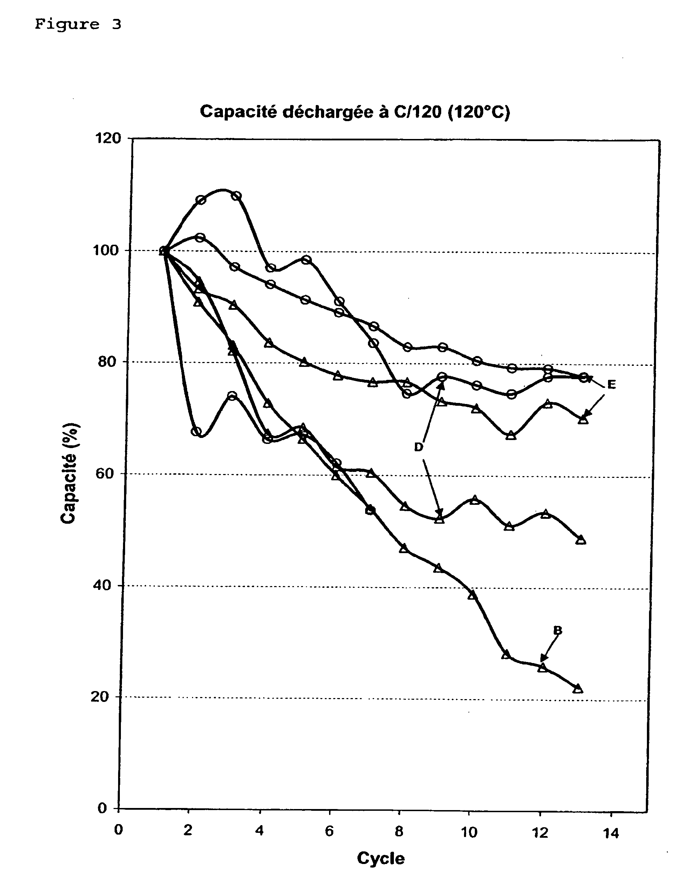

Les résultats de ce test sont présentés Figure 3.

**Tableau 2.**

| Série | Elément | Perte totale de capacité (%) | Remarques |
|---|---|---|---|
| A | A-1 | 88, 6 | Court-circuit au cycle 11 |
| | A-2 | 67,7 | Court-circuit au cycle 12 |
| B | B-1 | 58,5 | - |
| | B-2 | 54,3 | - |
| C | C-1 | 56,0 | Court-circuit au cycle 17 |
| | C-2 | 56,2 | Court-circuit au cycle 17 |

La figure 1 montre que:
- les accumulateurs de la deuxième série ont la perte totale de capacité la plus faible.
- les accumulateurs à cathode de LiCoO₂ la série A sont défaillants aux cycles 11 et 12 alors que les accumulateurs à cathode en LiNiO₂ substitué de la série B sont encore opérationnels au cycle 20.
- les accumulateurs à séparateur de PP de la série B sont encore opérationnels au cycle 20, alors que les accumulateurs à séparateur de PTFE de la série C sont défaillants au cycle 17.

La figure 2 montre par ailleurs que l'impédance interne des accumulateurs à cathode de LiCoO₂ de la série A augmente très fortement au cours du cyclage en comparaison avec les accumulateurs à cathode de LiNiO₂ des séries B et C.

La comparaison entre les courbes des séries B et E de la Figure 3 montre que la perte de capacité des accumulateurs E munis d'un séparateur de polyéthylène -téréphtalate (PET) revêtu de céramique est inférieure à la perte de capacité des accumulateurs B munis d'un séparateur de polypropylène, les matériaux d'électrodes et d'électrolyte étant identiques dans les deux séries.

D'autre part, la comparaison entre les courbes des séries D et E montre que la perte de capacité des accumulateurs D munis d'une cathode en LiNi_{0.55}Co_{0.15}Mn_{0.30}O₂ est comparable à la perte de capacité des accumulateurs E munis d'une cathode en LiNi_{0.8}Co_{0.15}Al_{0.05}O₂, les matériaux d'anode, les séparateurs et l'électrolyte étant identiques dans les deux séries D et E.

## Revendications

1. Accumulateur électrochimique comprenant une cathode, une anode comprenant soit Li₄Ti₅O₁₂, soit un matériau carboné capable d'insérer du lithium, un séparateur en polyéthylène téréphtalate revêtu de céramique, un solvant non aqueux, et un sel de lithium, le matériau actif de ladite cathode est un oxyde de métal lithié de formule LiNi_{1-x-y}CoₓAl/Mn_{y}O₂ dans laquelle :
Al/Mn signifie Al et/ou Mn
0,15<x<0,33;
0,05 < y < 0,33;
la somme x+y étant inférieure à 0,66;
le sel de lithium étant choisi dans le groupe consistant en LiPF₆, LiBF₄, le bisoxalatoborate de lithium (LiBOB), le bisperfluoroéthylsulfonylimide de lithium (LiBETI) et un mélange de ceux-ci.

2. Accumulateur selon la revendication 1, dans lequel la matière active de la cathode est choisie dans le groupe comprenant LiNi_{0,8}Co_{0,15}Al_{0,05}O₂ et LiNi_{0,55}Co_{0,15}Mn_{0,30}O₂.

3. Accumulateur selon l'une des revendications 1 à 2, dans lequel le sel de lithium est le LiPF₆.

4. Accumulateur selon l'une des revendications 1 à 3, dans lequel l'anode comprend un matériau carboné capable d'insérer réversiblement le lithium.

5. Accumulateur selon la revendication 4, dans lequel le matériau carboné de l'anode est choisi dans le groupe consistant en graphite, coke, noir de carbone, carbone vitreux et un mélange de ceux-ci.

6. Accumulateur selon l'une des revendications 1 à 5, dans lequel le solvant non-aqueux est choisi dans le groupe des carbonates cycliques, tels que le carbonate de propylène (PC) et le carbonate d'éthylène (EC) ou des lactones.

7. Accumulateur selon la revendication 6, dans lequel le solvant non-aqueux a un point d'ébullition d'au moins 150°C, de préférence d'au moins 200°C.

## Patentansprüche

1. Elektrochemischer Akkumulator, der umfasst:
- eine Kathode,
- eine Anode, die entweder Li₄Ti₅O₁₂ oder ein kohlenstoffhaltiges Material umfasst, das in der Lage ist, Lithium einzufügen,
- einen Separator aus Polyethylenterephthalat, der mit Keramik beschichtet ist,
- ein nicht wässriges Lösungsmittel und
- ein Lithiumsalz,
wobei das aktive Material der Kathode ein lithiumhaltiges Metalloxid ist,mit der Formel
LiNi_{1-x-y}CoₓAl/Mn_{y}O₂
wobei:
▪ Al/Mn bedeutet Al und/oder Mn,
▪ 0,15 < x < 0,33;
▪ 0,05 < y < 0,33;
wobei
▪ die Summe x+y kleiner als 0,66 ist;
▪ das Lithiumsalz in der Gruppe ausgewählt ist, die aus LiPF₆, LiBF₄, Lithiumbisoxalatoborat (LiBOB), Lithiumbisperfluorethylsulfonylimid (LiBETI) und einer Mischung daraus besteht.

2. Akkumulator nach Anspruch 1, wobei das aktive Material der Kathode in der Gruppe ausgewählt ist, die LiNi_{0,8}Co_{0,15}Al_{0,05}O₂ und LiNi_{0,55}Co_{0,15}Mn_{0,30}O₂ umfasst.

3. Akkumulator nach einem der Ansprüche 1 bis 2, wobei das Lithiumsalz LiPF₆ ist.

4. Akkumulator nach einem der Ansprüche 1 bis 3, wobei die Anode ein kohlenstoffhaltiges Material umfasst, das in der Lage ist, das Lithium reversibel einzufügen.

5. Akkumulator nach Anspruch 4, wobei das kohlenstoffhaltige Material der Anode in der Gruppe ausgewählt ist, die aus Graphit, Koks, Ruß, Glaskohlenstoff und einer Mischung daraus besteht.

6. Akkumulator nach einem der Ansprüche 1 bis 5, wobei das nicht wässrige Lösungsmittel in der Gruppe der zyklischen Carbonate ausgewählt ist, wie beispielsweise Propylencarbonat (PC) und Ethylencarbonat (EC) oder Laktone.

7. Akkumulator nach Anspruch 6, wobei das nicht wässrige Lösungsmittel einen Siedepunkt von mindestens 150°C, vorzugsweise von mindestens 200°C, aufweist.

## Claims

1. An electrochemical secondary cell comprising a cathode and anode comprising either Li₄Ti₅O₁₂ or a carbonaceous material capable of inserting lithium, a ceramic coated polyethylene terephthalate separator, a non-aqueous solvent and a lithium salt, the active material of said cathode is a lithiated metal oxide of the formula LiNi_{1-x-y}CoₓAl/Mn_{y}O₂ wherein:
Al/Mn stands for Al and/or Mn
0.15 < x < 0.33;
0.05 < y < 0.33;
the sum x + y being less than 0.66;
the lithium salt being selected from the group consisting of LiPF₆, LiBF₄, lithium bisoxalatoborate (LiBOB), lithium bisperfluoroethylsulfonylimide (LiBETI) and a mixture thereof.

2. The secondary cell according to claim 1, wherein the active material of the cathode is selected from the group comprising LiNi_{0.8}Co_{0.15}Al_{0.05}O₂ and LiNi_{0.55}Co_{0.15}Mn_{0.30}O₂.

3. The secondary cell according to one of claims 1 to 2, wherein the lithium salt is LiPF₆.

4. The secondary cell according to one of claims 1 to 3, wherein the anode comprises a carbonaceous material capable of reversibly inserting lithium.

5. The secondary cell according to claim 4, wherein the carbonaceous material of the anode is selected from the group consisting of graphite, coke, carbon black, vitreous carbon and a mixture thereof.

6. The secondary cell according to one of claims 1 to 5, wherein the non-aqueous solvent is selected from the group of cyclic carbonates such as propylene carbonate (PC) and ethylene carbonate (EC) or lactones.

7. The secondary cell according to claim 6, wherein the non-aqueous solvent has a boiling point of at least 150°C, preferably at least 200°C.
